# EUROPEAN PATENT APPLICATION

(11) **EP 4 848 371 A1**
(43) Date of publication of application: **02.12.2026**
(21) Application number: 25866255.0
(22) Date of filing: 10.09.2025
(51) Int. Cl.: H01M 4/525, H01M 4/505, H01M 10/052, H01M 4/02

(54) **POSITIVE ELECTRODE ACTIVE MATERIAL AND LITHIUM SECONDARY BATTERY COMPRISING SAME**

(30) Priority: 11.09.2024 KR 20240123851; 09.09.2025 KR 20250128494
(71) Applicant: EcoPro BM Co., Ltd, Cheongju-si, Chungcheongbuk-do 28116 (KR)
(72) Inventor: KIM, Sang Hyun, Cheongju-si, Chungcheongbuk-do 28116 (KR); LIM, Ra Na, Cheongju-si, Chungcheongbuk-do 28116 (KR); MOON, Chae Won, Cheongju-si, Chungcheongbuk-do 28116 (KR)
(74) Representative: Vossius & Partner Patentanwälte Rechtsanwälte mbB
(86) International application number: PCT/KR2025/014060
(87) International publication number: WO 2026/059295

(57) **Abstract**

The present invention relates to a positive electrode active material and a lithium secondary battery using a positive electrode comprising the positive electrode active material. More particularly, the present invention relates to a positive electrode active material capable of reducing lithium impurities without a washing process by including barium (Ba) and sulfur (S) in the positive electrode active material, and further, capable of improving capacity per unit volume by improving the conductivity of the positive electrode active material, and a lithium secondary battery using a positive electrode comprising the positive electrode active material.

## Description

### BACKGROUND

### 1. Field of the Invention

The present invention relates to a positive electrode active material and a lithium secondary battery using a positive electrode comprising the positive electrode active material. More particularly, the present invention relates to a positive electrode active material capable of reducing lithium impurities without a washing process by including barium (Ba) and sulfur (S) in the positive electrode active material, and further, capable of improving capacity per unit volume by improving the conductivity of the positive electrode active material, and a lithium secondary battery using a positive electrode comprising the positive electrode active material.

### 2. Discussion of Related Art

A battery is a device that stores electric power by using materials capable of an electrochemical reaction at a positive electrode and a negative electrode. Among these, a representative example is a lithium secondary battery that stores electric power by using a difference in chemical potential generated during intercalation and deintercalation (intercalation/deintercalation) of lithium ions at a positive electrode and a negative electrode.

A lithium secondary battery uses materials capable of reversible intercalation/deintercalation of lithium ions as a positive electrode active material and a negative electrode active material, and an organic electrolyte solution or a solid polymer electrolyte is provided between a positive electrode and a negative electrode.

As the positive electrode active material, a lithium transition metal oxide is mainly used, and representative examples include composite oxides such as LiCoO₂, LiMn₂O₄, LiNiO₂, and LiMnO₂.

Among these, LiCoO₂ has been widely used due to excellent cycle life characteristics and charge/discharge efficiency; however, its price competitiveness is limited because of cobalt resource constraints and high cost.

Lithium manganese oxide series (LiMnO₂ and LiMn₂O₄) offer advantages of excellent thermal stability and low cost, but issues of low capacity and deterioration of high-temperature characteristics have been raised. A LiNiO₂-based positive electrode active material has an advantage of high discharge capacity, but is difficult to synthesize due to a cation mixing phenomenon between Li and transition metals, and as a result, has limitations in rate characteristics and cycle life characteristics.

In order to improve these problems, as materials with improved rate characteristics and cycle life characteristics while maintaining the high reversible capacity of LiNiO₂, multi-component lithium transition metal oxides such as NCM (Ni-Co-Mn), NCA (Ni-Co-Al), and NCMA (Ni-Co-Mn-Al), in which a part of nickel is substituted with cobalt, manganese and/or aluminum, have been developed.

Since such multi-component lithium transition metal oxides exhibit a higher reversible capacity as the nickel content increases, in fields requiring high-performance lithium secondary batteries, multi-component lithium transition metal oxides having a high nickel content among lithium transition metal oxides are preferred.

However, as the nickel content in the lithium transition metal oxide increases, the cation mixing phenomenon is intensified, thereby causing a problem that stability of the crystal structure is reduced. In addition, in the synthesis process of the positive electrode active material, unreacted lithium by-products such as LiOH and Li₂CO₃ tend to remain on the surface of the positive electrode active material. When the residual amount of such unreacted lithium by-products increases, problems such as gas generation, cell swelling, and gelation of an electrode paste may occur, and this may consequently lead to performance degradation of the lithium secondary battery.

Since lithium by-products are water-soluble, generally, after calcination of a precursor, they may be removed from the positive electrode active material through a water-washing process using distilled water or the like. Such a washing process can contribute to effectively reducing lithium by-products present in the positive electrode active material (particularly, lithium by-products present on the surface of the positive electrode active material). However, in the water-washing process, there is a concern that the surface of the positive electrode active material may be damaged, and due to this, electrochemical characteristics and thermal stability of the positive electrode active material may deteriorate. In addition, since the water-washing process for removing lithium by-products requires additional equipment and process steps, it acts as one of the factors increasing the manufacturing cost of the positive electrode active material.

Recently, as demand for lithium secondary batteries has rapidly increased, prices of raw materials are also increasing, and thus the lithium secondary battery industry is facing a strong need for cost reduction. In this situation, reduction or removal of the water-washing process that impairs process efficiency and increases manufacturing unit costs is emerging as an important technical challenge.

Meanwhile, when the size of unit particles (primary particles) constituting the lithium transition metal oxide is excessively small, a contact area with the electrolyte increases due to a large specific surface area. As a result, side reactions with the electrolyte are promoted during repeated charging/discharging, such that gas may be excessively generated within a cell. Such gas generation causes problems such as cell swelling, an increase in internal pressure, electrolyte consumption, and deterioration of cycle life, and acts as one of the main causes that impair reliability and safety of the battery.

As a method for reducing the specific surface area of the lithium transition metal oxide, an approach of inducing the growth of primary particles by increasing a sintering temperature has also been attempted. However, an excessively high sintering temperature causes deterioration of the crystal structure and compositional non-uniformity, thereby rather increasing the concentration of unreacted lithium by-products, and consequently may cause the electrochemical performance of the positive electrode active material to deteriorate.

### SUMMARY OF THE INVENTION

Recently, with the growth of the electric vehicle industry, the lithium secondary battery market is rapidly expanding, and demand and required performance of positive electrode materials used therein are also continuously changing. For example, conventionally, LFP-based lithium secondary batteries emphasizing safety were mainly used, but recently, the use of nickel-based lithium transition metal oxides having a higher energy density per weight has been increasing.

In line with this trend, a positive electrode active material applied to high-performance lithium secondary batteries should be capable of securing stability and reliability at the same time even under severe operating conditions, as well as high energy density.

There is a need to develop a positive electrode active material capable of reducing a specific surface area by effectively inducing particle growth without impairing structural stability, thereby reducing residual lithium formation and gas generation.

In particular, if lithium by-products can be reduced without a washing process or particle growth can be induced without structural deterioration, gas generation and stability problems may be simultaneously solved while preventing damage to the positive electrode active material.

Accordingly, an object of the present invention is to provide a positive electrode active material, which includes barium (Ba) and sulfur (S) therein, thereby reducing lithium impurities without a washing process.

In addition, an object of the present invention is to provide a positive electrode active material capable of reducing a specific surface area of the lithium transition metal oxide by contributing to the growth of unit particles constituting the lithium transition metal oxide, thereby suppressing side reactions with an electrolyte, by including barium (Ba) and sulfur (S) therein.

In addition, an object of the present invention is to provide a positive electrode active material, which includes barium (Ba) and sulfur (S) therein, thereby improving conductivity while suppressing side reactions with an electrolyte.

The present invention for solving the above-described technical problems includes the following inventions.
[1] A positive electrode active material including a lithium transition metal oxide capable of intercalation/deintercalation of lithium, wherein the positive electrode active material includes barium (Ba) and sulfur (S), a full width at half maximum of a diffraction peak detected at 2θ=18.0 to 19.5° obtained by X-ray diffraction analysis of the positive electrode active material using Cu-Kα radiation is 0.090 or less, and an average crystallite size of the lithium transition metal oxide is 120 nm to 210 run.
[2] The positive electrode active material according to [1], wherein a ratio ([B+C]/A) of a sum of an intensity (B) of a diffraction peak detected at 2θ=25.5 to 26.2° and an intensity (C) of a diffraction peak detected at 2θ=28.5 to 28.9° to an intensity (A) of a diffraction peak detected at 2θ=18.0 to 19.5° obtained by X-ray diffraction analysis of the positive electrode active material using Cu-Kα radiation is 0.005 or more and 0.03 or less.
[3] The positive electrode active material according to any one of [1] and [2], wherein the lithium transition metal oxide includes at least one selected from nickel, cobalt, manganese, and aluminum.
[4] The positive electrode active material according to any one of [1] and [2], wherein the lithium transition metal oxide includes nickel, cobalt, and manganese.
[5] The positive electrode active material according to any one of [1] to [4], wherein barium (Ba) is doped into a crystal lattice of the lithium transition metal oxide.
[6] The positive electrode active material according to any one of [1] to [5], wherein the lithium transition metal oxide has at least one form selected from a single-particle form consisting of one unit particle and a secondary-particle form in which a plurality of unit particles are aggregated.
[7] The positive electrode active material according to any one of [1] to [6], wherein an average particle diameter of the unit particles measured from an SEM image of the lithium transition metal oxide is 1.5 µm to 7.5 µm.
[8] The positive electrode active material according to any one of [1] to [7], wherein the lithium transition metal oxide has a single-particle form, and barium (Ba) and sulfur (S) are present on at least a portion of a surface of the single particle.
[9] The positive electrode active material according to any one of [1] to [7], wherein the lithium transition metal oxide has a pseudo-single-particle form in which 30 or fewer unit particles are aggregated, and barium (Ba) and sulfur (S) are present on at least a portion of a surface of a unit particle forming an outermost surface of the pseudo-single particle, a surface of a unit particle isolated inside the pseudo-single particle, and an interface between unit particles isolated inside the pseudo-single particle.
[10] The positive electrode active material according to any one of [1] to [9], wherein the lithium transition metal oxide includes 60 mol% or more of nickel with respect to all elements excluding lithium.
[11] The positive electrode active material according to any one of [1] to [10], wherein the lithium transition metal oxide has an average composition represented by Formula 1 below:

   [Formula 1] LiₐNi_{1-(b+c+d)}Co_{b}M1_{c}M2_{d}O₂

   In Formula 1,
   M1 is at least one selected from Mn and Al,
   M2 is at least one selected from Zr, Na, S, Mg, Ti, B, K, Ca, Sr, Ba, Rb, Ce, Hf, Ta, Cr, F, V, Fe, Zn, Si, Y, Nb, Ga, Sn, Mo, W, P, Ge, Nd, Gd, and Cu, and
   0.85≤a≤1.15, 0≤b≤0.20, 0≤c≤0.20, 0≤d≤0.05, and 0<b+c≤0.40.
[12] The positive electrode active material according to any one of [1] to [11], wherein barium (Ba) is contained in an amount of 200 ppm to 30,000 ppm with respect to the total weight of the positive electrode active material.
[13] The positive electrode active material according to any one of [1] to [12], wherein sulfur (S) is contained in an amount of 500 ppm to 3,000 ppm with respect to the total weight of the positive electrode active material.
   In addition, the present invention includes the following other aspects.
[14] A positive electrode comprising the positive electrode active material according to any one of [1] to [13].
[15] A lithium secondary battery using the positive electrode according to [14].

According to the present invention, by including barium (Ba) and sulfur (S) in the positive electrode active material, lithium by-products can be reduced without a washing process, making it possible to improve process efficiency and reduce manufacturing costs.

Therefore, according to the present invention, surface damage to the positive electrode active material caused by the washing process can be prevented, and thereby, electrochemical characteristics and long-term reliability with respect to thermal stability of the positive electrode active material can be increased.

In addition, according to the present invention, by including barium (Ba) and sulfur (S) in the positive electrode active material, conductivity can be improved and side reactions with an electrolyte can be suppressed.

### BRIEF DESCRIPTION OF THE DRAWINGS

FIGS. 1 to 11 are SEM images of lithium transition metal oxides included in positive electrode active materials according to Examples 1 to 11, respectively.
FIGS. 12 to 18 are SEM images of lithium transition metal oxides included in positive electrode active materials according to Comparative Examples 1 to 7, respectively.
FIG. 19 shows the results of surface EDS analysis of a lithium transition metal oxide included in a positive electrode active material according to Example 3.
FIG. 20 shows the results of surface EDS analysis of a lithium transition metal oxide included in a positive electrode active material according to Example 11.
FIG. 21 shows the results of surface EDS analysis of a lithium transition metal oxide included in a positive electrode active material according to Comparative Example 1.
FIG. 22 shows the results of surface EDS analysis of a lithium transition metal oxide included in a positive electrode active material according to Comparative Example 5.
FIG. 23 shows the results of surface EDS analysis of a lithium transition metal oxide included in a positive electrode active material according to Comparative Example 6.

### DETAILED DESCRIPTION OF EXEMPLARY EMBODIMENTS

In order to more easily understand the present invention, specific terms are defined herein for convenience. Unless otherwise defined herein, scientific terms and technical terms used in the present invention will have meanings generally understood by a person having ordinary knowledge in the art. In addition, unless specifically specified in context, a term in singular form should be understood to include its plural form, and a term in plural form should be understood to include its singular form.

Hereinafter, a positive electrode active material according to the present invention and a lithium secondary battery using a positive electrode comprising the positive electrode active material will be described in more detail.

### Positive Electrode Active Material

The positive electrode active material herein includes a lithium transition metal oxide capable of reversible intercalation/deintercalation of lithium ions. Here, the lithium transition metal oxide means an oxide in which lithium and a metal element are combined.

The lithium transition metal oxide is a composite metal oxide capable of intercalation/deintercalation of lithium ions, and has a layered crystal structure belonging to an R-3m space group. The lithium transition metal oxide having a layered crystal structure exhibits a specific peak in a region where 20 is 18° to 20° (for example, a 2θ=18.6±1° region) among diffraction patterns obtained from XRD analysis.

The lithium transition metal oxide may contain at least one selected from nickel, cobalt, manganese, and aluminum.

The lithium transition metal oxide may be a lithium nickel-based metal composite oxide containing nickel. To improve the low rate characteristics and cycle life characteristics while maintaining the high reversible capacity of LiNiO₂, the lithium transition metal oxide may be a multi-component lithium transition metal oxide such as NCM (Ni-Co-Mn), NCA (Ni-Co-Al), and NCMA (Ni-Co-Mn-Al), wherein the lithium transition metal oxide additionally contains cobalt, manganese, and/or aluminum. In addition, the lithium transition metal oxide may be a so-called cobalt-free type lithium transition metal oxide that does not contain cobalt.

The lithium transition metal oxide may have an average composition represented by the following Chemical Formula 1. The average composition of the lithium transition metal oxide may be determined according to a known ICP analysis method using an inductively coupled plasma (ICP) spectrometer.

[Chemical Formula 1] LiₐNi_{1-(b+c+d)}Co_{b}M1_{c}M2_{d}O₂

In Chemical Formula 1,
M1 is at least one selected from Mn and Al,
M2 is at least one selected from Zr, Na, S, Mg, Ti, B, K, Ca, Sr, Ba, Rb, Ce, Hf, Ta, Cr, F, V, Fe, Zn, Si, Y, Nb, Ga, Sn, Mo, W, P, Ge, Nd, Gd, and Cu,
0.85≤a≤1.15, 0≤b≤0.20, 0≤c≤0.20, 0≤d≤0.05, and 0<b+c≤0.40.

In Chemical Formula 1, a, representing a ratio (Li/Ni+Co+M1+M2) of lithium to all elements other than lithium in the lithium transition metal oxide, may be 0.85 or more, 0.86 or more, 0.87 or more, 0.88 or more, 0.89 or more, 0.90 or more, 0.91 or more, 0.92 or more, 0.93 or more, 0.94 or more, 0.95 or more, 0.96 or more, 0.97 or more, 0.98 or more, 0.99 or more, 1.00 or more, 1.01 or more, 1.02 or more, 1.03 or more, 1.04 or more, or 1.05 or more. In addition, a may be 1.15 or less, 1.14 or less, 1.13 or less, 1.12 or less, 1.11 or less, 1.10 or less, 1.09 or less, 1.08 or less, 1.07 or less, 1.06 or less, or 1.05 or less. The upper and lower limits of the mole fraction of lithium to all elements other than lithium in the lithium transition metal oxide may be appropriately selected within a range satisfying the above-described definition. When the mole fraction of lithium in the lithium transition metal oxide satisfies the above range, a stable crystal structure can be formed.

In Chemical Formula 1, 1-(b+c+d) representing a mole fraction (Ni/Ni+Co+M1+M2) of nickel to all elements other than lithium in the lithium transition metal oxide may be 0.60 or more, 0.65 or more, 0.67 or more, 0.70 or more, 0.72 or more, 0.75 or more, 0.77 or more, 0.80 or more, 0.82 or more, 0.83 or more, 0.84 or more, 0.85 or more, 0.86 or more, 0.87 or more, 0.88 or more, 0.89 or more, 0.90 or more, 0.91 or more, 0.92 or more, 0.93 or more, 0.94 or more, or 0.95 or more. In addition, 1-(b+c+d) may be less than 1.0, 0.99 or less, 0.98 or less, or 0.97 or less. The upper and lower limits of the mole fraction of nickel to all elements other than lithium in the lithium transition metal oxide may be appropriately selected within a range satisfying the above-described definition. When the mole fraction of nickel in the lithium transition metal oxide satisfies the above range, a stable crystal structure can be formed, and high energy density can be exhibited.

In Chemical Formula 1, b, representing a mole fraction (Co/Ni+Co+M1+M2) of cobalt to all elements other than lithium in the lithium transition metal oxide, may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, or 0.02 or less. When the lithium transition metal oxide is a cobalt-free type lithium transition metal oxide, b may be 0. When the lithium transition metal oxide includes cobalt, b may be greater than 0, 0.01 or more, or 0.02 or more. The upper and lower limits of the mole fraction of cobalt to all elements other than lithium in the lithium transition metal oxide may be appropriately selected within a range satisfying the above-described definition. When the mole fraction of cobalt in the lithium transition metal oxide satisfies the above range, a stable crystal structure can be formed, and good output characteristics can be exhibited.

In Chemical Formula 1, c, representing a mole fraction (M1/Ni+Co+M1+M2) of manganese and/or aluminum to all elements other than lithium in the lithium transition metal oxide, may be 0.20 or less, 0.19 or less, 0.18 or less, 0.17 or less, 0.16 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, 0.04 or less, 0.03 or less, or 0.02 or less. When the lithium transition metal oxide contains manganese and/or aluminum, c may be greater than 0, 0.01 or more, or 0.02 or more. The upper and lower limits of the mole fraction of manganese and/or aluminum to all elements other than lithium in the lithium transition metal oxide may be appropriately selected within a range satisfying the above-described definition. When the mole fraction of manganese and/or aluminum in the lithium transition metal oxide satisfies the above range, a stable crystal structure can be formed.

In addition, when the lithium transition metal oxide contains cobalt and at least one selected from manganese and aluminum, in Chemical Formula 1, b+c may be 0.40 or less, 0.37 or less, 0.35 or less, 0.32 or less, 0.30 or less, 0.28 or less, 0.25 or less, 0.23 or less, 0.20 or less, 0.18 or less, 0.15 or less, 0.14 or less, 0.13 or less, 0.12 or less, 0.11 or less, 0.10 or less, 0.09 or less, 0.08 or less, 0.07 or less, 0.06 or less, 0.05 or less, or 0.04 or less.

In Chemical Formula 1, M2 means a dopant that may be present in the crystal structure of the lithium transition metal oxide. The lithium transition metal oxide has a layered crystal structure in which a lithium layer containing lithium and a transition metal layer containing a transition metal are alternately arranged (alternate arrangement), and the dopant may be incorporated into at least one crystal layer among the lithium layer and the transition metal layer.

When the lithium transition metal oxide includes a dopant, in Chemical Formula 1, d representing a mole fraction (M2/Ni+Co+M1+M2) of the dopant to all elements other than lithium in the lithium transition metal oxide may be 0.05 or less, 0.045 or less, 0.04 or less, 0.035 or less, 0.03 or less, 0.025 or less, 0.02 or less, 0.015 or less, 0.01 or less, 0.009 or less, 0.008 or less, 0.007 or less, 0.006 or less, 0.005 or less, 0.004 or less, 0.003 or less, 0.002 or less, or 0.001 or less.

When the lithium transition metal oxide optionally includes a dopant, the dopant may contain at least one selected from Na, K, Mg, Ca, Sr, Ba, Rb, B, Ce, Hf, Ta, Cr, F, V, Ti, Fe, Zr, Zn, Si, Y, Nb, Ga, Sn, Mo, W, P, Ge, Nd, Gd, and Cu, preferably at least one selected from Mg, Ca, Ba, B, V, Ti, Fe, Zr, Zn, Si, Nb, Mo, W, and Cu, more preferably at least one selected from Mg, Ca, Ba, B, Ti, Zr, Si, Nb, Mo, and W.

In addition, the lithium transition metal oxide may contain barium (Ba) as a dopant. The type, combination, and content of the dopant may be appropriately selected within a range that does not negatively affect the electrochemical characteristics and stability of the positive electrode active material.

The dopant may be doped into the lithium transition metal oxide by mixing a precursor of the lithium transition metal oxide and a dopant-containing raw material and then performing heat treatment (calcination). The lithium transition metal oxide may be obtained by mixing a precursor of the lithium transition metal oxide, a lithium raw material (for example, LiOH, Li₂CO₃, or a combination thereof), and the dopant-containing raw material and then performing heat treatment (calcination). As the dopant-containing material, a fluoride, chloride, carbonate, sulfate, nitrate, phosphate, oxide, and/or hydroxide of the above-described dopant, and the like may be used.

The precursor of the lithium transition metal oxide may be a hydroxide precursor including at least one selected from nickel, cobalt, manganese, and aluminum. In addition, the hydroxide precursor may be a hydroxide precursor containing nickel, a hydroxide precursor containing nickel and cobalt, a hydroxide precursor containing nickel, cobalt, and manganese, a hydroxide precursor containing nickel, cobalt, and aluminum, or a hydroxide precursor containing nickel, cobalt, manganese, and aluminum. The hydroxide precursor may be synthesized using a metal aqueous solution including the above-described metal element according to a known co-precipitation method. In this case, the lithium transition metal oxide may be obtained by mixing the hydroxide precursor, a lithium raw material (for example, LiOH, Li₂CO₃, or a combination thereof), and the dopant-containing raw material and then performing heat treatment (calcination).

As the precursor of the lithium transition metal oxide, an oxide precursor obtained by oxidizing a hydroxide precursor containing at least one selected from nickel, cobalt, manganese, and aluminum may be used. The oxide precursor may be obtained by oxidizing the hydroxide precursor at a temperature lower than the main calcination temperature (for example, 800°C or less, 700°C or less, 600°C or less, or 500°C or less). In this case, the lithium transition metal oxide may be obtained by mixing the oxide precursor, a lithium raw material (for example, LiOH, Li₂CO₃, or a combination thereof), and the dopant-containing raw material, followed by heat treatment (calcination).

In addition, the dopant may be derived from a flux used for crystal growth of the lithium transition metal oxide. By using the flux during the calcination of a precursor of the lithium transition metal oxide, crystal growth of the lithium transition metal oxide may be induced. At this time, some of the metal elements contained in the flux may be doped into the crystal structure of the lithium transition metal oxide. Elements that may be included in the flux for crystal growth of the lithium transition metal oxide include at least one selected from Group 1 elements, Group 2 elements, Ba, Y, Zr, Ce, and Nb.

The positive electrode active material includes barium (Ba) and sulfur (S). The contents of barium (Ba) and sulfur (S) in the positive electrode active material may be measured according to a known ICP analysis method using an inductively coupled plasma spectrometer (ICP).

Barium (Ba) may be contained in an amount of 600 ppm or more, 650 ppm or more, 700 ppm or more, 750 ppm or more, 800 ppm or more, 850 ppm or more, 900 ppm or more, 950 ppm or more, or 1,000 ppm or more with respect to the total weight of the positive electrode active material. In addition, barium (Ba) may be contained in an amount of 30,000 ppm or less, 29,000 ppm or less, 28,000 ppm or less, 27,000 ppm or less, 26,000 ppm or less, 25,000 ppm or less, 24,000 ppm or less, 23,000 ppm or less, 22,000 ppm or less, 21,000 ppm or less, 20,000 ppm or less, 19,000 ppm or less, 18,000 ppm or less, 17,000 ppm or less, 16,000 ppm or less, 15,000 ppm or less, 14,500 ppm or less, 14,000 ppm or less, 13,500 ppm or less, 13,000 ppm or less, or 12,500 ppm or less with respect to the total weight of the positive electrode active material.

When the content of barium (Ba) in the positive electrode active material is less than 600 ppm, the crystal growth effect of unit particles constituting the lithium transition metal oxide by barium (Ba) may be insignificant. Accordingly, it may be difficult to exhibit an effect of suppressing side reactions with the electrolyte by reducing the specific surface area of the lithium transition metal oxide.

On the other hand, when the content of barium (Ba) in the positive electrode active material exceeds 30,000 ppm, as crystal growth of the unit particles constituting the lithium transition metal oxide becomes excessively large, a migration distance of lithium ions increases, such that kinetic characteristics may deteriorate, or a problem of cycle life deterioration may be caused.

Sulfur (S) may be contained in an amount of 500 ppm or more, 550 ppm or more, 600 ppm or more, 650 ppm or more, 700 ppm or more, 750 ppm or more, or 800 ppm or more with respect to the total weight of the positive electrode active material. In addition, sulfur (S) may be contained in an amount of 3,000 ppm or less, 2,900 ppm or less, 2,800 ppm or less, 2,700 ppm or less, 2,600 ppm or less, 2,500 ppm or less, 2,400 ppm or less, 2,300 ppm or less, or 2,250 ppm or less with respect to the total weight of the positive electrode active material.

When the content of sulfur (S) in the positive electrode active material is less than 500 ppm, barium (Ba) not doped into the crystal lattice of the lithium transition metal oxide may have difficulty sufficiently forming a compound with sulfur (S). That is, an amount of barium (Ba) present in the form of a compound (e.g., BaSO₄) decreases, such that it may be difficult to expect sufficient improvement in conductivity.

On the other hand, when the content of sulfur (S) in the positive electrode active material exceeds 3,000 ppm, the content of sulfur (S)-derived impurities (e.g., Li₂SO₄ and Li,S) in the positive electrode active material becomes excessively large, such that there is a concern that stability may deteriorate or side reactions may be promoted. In addition, there is a concern that such sulfur (S)-derived impurities may form a cathode electrolyte interphase (CEI) layer on the surface of the lithium transition metal oxide, thereby deteriorating surface kinetic characteristics. Furthermore, when the content of sulfur (S) in the positive electrode active material is excessively large, movement of lithium ions in the crystal lattice of the lithium transition metal oxide may be hindered, thereby reducing ionic conductivity.

The weight ratio (S/Ba) of sulfur (S) and barium (Ba), calculated by ICP analysis of the positive electrode active material, may be 0.06 or more, 0.065 or more, 0.07 or more, 0.075 or more, 0.08 or more, 0.085 or more, 0.090 or more, 0.095 or more, 0.10 or more, 0.105 or more, or 0.11 or more, and 15.0 or less, 14.0 or less, 13.0 or less, 12.0 or less, 11.0 or less, 10.0 or less, 9.0 or less, 8.0 or less, 7.0 or less, 6.0 or less, 5.0 or less, 4.5 or less, 4.0 or less, 3.5 or less, 3.0 or less, 2.9 or less, 2.8 or less, 2.7 or less, 2.6 or less, 2.5 or less, 2.4 or less, 2.3 or less, 2.2 or less, 2.1 or less, 2.0 or less, 1.9 or less, 1.8 or less, 1.7 or less, 1.6 or less, 1.5 or less, 1.45 or less, 1.4 or less, 1.35 or less, 1.3 or less, 1.25 or less, or 1.2 or less.

When the weight ratio (S/Ba) of sulfur (S) and barium (Ba), calculated by ICP analysis of the positive electrode active material, is less than 0.06, the content of barium (Ba) in the positive electrode active material may be excessively large, or the content of sulfur (S) may be excessively small.

When the content of barium (Ba) in the positive electrode active material is excessively large, as crystal growth of the unit particles constituting the lithium transition metal oxide becomes excessively large, a migration distance of lithium ions increases, such that kinetic characteristics may deteriorate, or a problem of cycle life deterioration may be caused.

When the content of sulfur (S) in the positive electrode active material is excessively small, barium (Ba) not doped into the crystal lattice of the lithium transition metal oxide may have difficulty sufficiently forming a compound with sulfur (S). That is, an amount of barium (Ba) present in the form of a compound (e.g., BaSO₄) decreases, such that it may be difficult to expect sufficient improvement in conductivity.

When the weight ratio (S/Ba) of sulfur (S) and barium (Ba), calculated by ICP analysis of the positive electrode active material, exceeds 15.0, the content of barium (Ba) in the positive electrode active material may be excessively small, or the content of sulfur (S) may be excessively large.

When the content of barium (Ba) in the positive electrode active material is excessively small, the crystal growth effect of unit particles constituting the lithium transition metal oxide by barium (Ba) may be insignificant. Accordingly, it may be difficult to exhibit an effect of suppressing side reactions with the electrolyte by reducing the specific surface area of the lithium transition metal oxide.

When the content of sulfur (S) in the positive electrode active material is excessively large, the content of sulfur (S)-derived impurities (e.g., Li₂SO₄ and Li₂S) in the positive electrode active material becomes excessively large, such that there is a concern that stability may deteriorate or side reactions may be promoted. In addition, there is a concern that such sulfur (S)-derived impurities may form a CEI (Cathode electrolyte interphase) layer on the surface of the lithium transition metal oxide, thereby deteriorating surface kinetic characteristics. Furthermore, when the content of sulfur (S) in the positive electrode active material is excessively large, movement of lithium ions in the crystal lattice of the lithium transition metal oxide may be hindered, thereby reducing ionic conductivity.

The lithium transition metal oxide may have a single-particle form consisting of one unit particle and/or a secondary particle form in which a plurality of unit particles are aggregated. That is, the lithium transition metal oxide may consist of a single particle (or referred to as a single particle), or may be present as a secondary particle in which a plurality of single particles are aggregated. The plurality of single particles constituting the secondary particle are each referred to as primary particles or unit particles, and the secondary particle may be referred to as a bulk or bulk particle.

In addition, the lithium transition metal oxide may have a pseudo-single-particle form in which 30 or fewer, 25 or fewer, 20 or fewer, 15 or fewer, or 10 or fewer unit particles are aggregated. In this case, the lithium transition metal oxide may be referred to as a pseudo-single particle. The number of unit particles forming the pseudo-single particle may vary depending on the size of the unit particles. For example, as the size of the unit particles forming the pseudo-single particle increases, the number of unit particles forming the pseudo-single particle may decrease.

Here, when the lithium transition metal oxide that is a single particle is referred to as a non-aggregate, and the lithium transition metal oxide that is a secondary particle is referred to as an aggregate, the positive electrode active material may include an aggregate and/or a non-aggregate. For example, the positive electrode active material may include only the lithium transition metal oxide that is a non-aggregate, or may include only the lithium transition metal oxide that is an aggregate. In addition, the positive electrode active material may be present as an assembly in which the lithium transition metal oxide that is a non-aggregate and the lithium transition metal oxide that is an aggregate are mixed.

For convenience, herein, the unit particle, the single particle, the primary particle, and the secondary particle may all be referred to as a lithium transition metal oxide, and since the single particle and the primary particle are both a single particle, hereinafter, they will both be referred to as a primary particle.

The primary particle may have a rod shape, an elliptical shape, and/or an irregular shape. In addition, unless specifically intended in the manufacturing process, primary particles of various shapes may be present in the same positive electrode active material. In addition, the primary particle means a particle unit in which no grain boundary is visually observed when observed using a scanning electron microscope at a magnification of 5,000 times to 20,000 times.

In addition, the primary particle may mean one grain or crystallite. The single particle and/or the primary particle may include a single-crystal structure having a single crystallite or a polycrystal structure having a plurality of crystallites.

Herein, the average particle diameter of the single particle present as a non-aggregate and/or the primary particle constituting the aggregate may be greater than 1.1 µm, 1.15 µm or more, 1.20 µm or more, 1.25 µm or more, 1.30 µm or more, 1.35 µm or more, 1.40 µm or more, 1.45 µm or more, or 1.50 µm or more. In addition, the average particle diameter of the primary particle may be 7.5 µm or less, 7.4 µm or less, 7.3 µm or less, 7.2 µm or less, 7.1 µm or less, 7.0 µm or less, 6.9 µm or less, or 6.8 µm or less. The upper and lower limits of the average particle diameter of the primary particle may be appropriately selected within a range satisfying the above-described definition.

The average particle diameter of the primary particle may be calculated as an average value ([major axis length+minor axis length]/2) of a length in a major axis direction and a length in a minor axis direction of the primary particle. The length in the major axis direction and the length in the minor axis direction of the primary particle may be calculated from an SEM image of the non-aggregate and/or the aggregate.

Herein, the average particle diameter of the secondary particle present as an aggregate may be 2.0 µm to 20 µm, 2.0 µm to 18 µm, 2.0 µm to 15 µm, 2.0 µm to 12 µm, 3.0 µm to 20 µm, 3.0 µm to 18 µm, 3.0 µm to 15 µm, or 3.0 µm to 12 µm.

The average particle diameter of the secondary particle may vary depending on the number of primary particles constituting the secondary particle. The average particle diameter (D50) of the secondary particle may be measured using a laser diffraction method. For example, the secondary particle may be measured by dispersing secondary particles in a dispersion medium, introducing the dispersion medium into a commercially available laser diffraction particle size measurement device (for example, Microtrac MT 3000), irradiating ultrasonic waves of about 28kHz at an output of 60W, then obtaining a volume cumulative particle size distribution graph, and then obtaining a particle size corresponding to 50% of the cumulative volume. In addition, in another case, the average particle diameter of the secondary particle may be calculated as an average value of the particle diameters of secondary particles identified from an SEM image.

As described above, the lithium transition metal oxide has at least one of a single-particle form consisting of one unit particle and a secondary particle form in which a plurality of unit particles are aggregated, and when the lithium transition metal oxide has a secondary particle form, the secondary particle preferably has a pseudo-single-particle form in which 30 or fewer unit particles are aggregated. When the lithium transition metal oxide constituting the positive electrode active material has a single particle form and/or a pseudo-single particle form, lithium impurities may be reduced without a washing process by including barium (Ba) and sulfur (S) in the positive electrode active material, and furthermore, capacity per unit volume may be improved by improving the conductivity of the positive electrode active material.

The secondary particle may be divided into a central portion corresponding to a region relatively close to the exact center of the secondary particle and a surface portion corresponding to a region close to an outer surface of the secondary particle.

Unless separately defined herein, based on the average radius of the secondary particle, a region defined as a distance within half the average radius from the exact center of the secondary particle may be referred to as a central portion, and a region defined as a distance within half the average radius from the outer surface of the secondary particle may be referred to as a surface portion.

Pores, gaps, and/or grain boundaries may be present between the primary particles constituting the secondary particle.

For example, the primary particle may be spaced apart from an adjacent primary particle inside the secondary particle to form an inner pore. At this time, the inner pore may be a closed pore and/or an open pore. The closed pore refers to a pore isolated inside the secondary particle without being connected to the surface of the secondary particle, and the open pore refers to a pore connected to the surface of the secondary particle.

In addition, the primary particle may define a grain boundary, which is formed as the primary particle comes into contact with an adjacent primary particle. That is, the grain boundary is a boundary formed by adjacent primary particles coming into contact with each other, and the grain boundary should not be interpreted as being included in the primary particle. Therefore, a heterogeneous metal oxide having a composition and crystal structure different from those of the primary particle may be present along the grain boundary.

A surface exposed to the outside among the primary particles present in the surface portion of the secondary particle forms the surface (outer surface) of the secondary particle.

A coating portion is present on at least a portion of the surface of the lithium transition metal oxide, and the coating portion may include barium (Ba) and sulfur (S). The coating portion may be defined as a region in which barium (Ba) and sulfur (S) are present on the surface of the lithium transition metal oxide. The coating portion may have a form that entirely or partially covers the surface of the lithium transition metal oxide. In addition, the coating portion may have an island form.

When the lithium transition metal oxide has a single particle form, barium (Ba) and sulfur (S) may be present on at least a portion of the surface of the single particle. In addition, when the lithium transition metal oxide has a secondary particle form (or a pseudo-single particle form) in which a plurality of unit particles are agglomerated, barium (Ba) and sulfur (S) may be present on at least a portion of the surface of a unit particle forming the outermost surface of the secondary particle, the surface of a unit particle isolated inside the secondary particle, and an interface between unit particles isolated inside the secondary particle. In the positive electrode active material, barium (Ba) and sulfur (S) may be present as a compound (e.g., BaSO₄).

In addition, barium (Ba) and sulfur (S) may be present in an inner pore or inner gap formed by unit particles isolated inside the secondary particle being spaced apart. The inner pore or inner gap corresponds to an empty space in which a plurality of unit particles do not form direct contact with each other, and a compound containing barium (Ba) and sulfur (S) may be present in a form filling the inner pore or inner gap.

The interface between unit particles isolated inside the secondary particle may be defined as a grain boundary. The compound containing barium (Ba) and sulfur (S) may be present wholly or partially in the grain boundary, the inner pore, and/or the inner gap. In addition, the compound containing barium (Ba) and sulfur (S) may be selectively present in a region adjacent to the surface of the secondary particle, or may be irregularly distributed inside the secondary particle.

A compound containing barium (Ba) and sulfur (S) may be present on a surface of a unit particle forming the outermost surface of the secondary particle. The compound containing barium (Ba) and sulfur (S) may be present wholly or partially on the surface of the secondary particle. The compound containing barium (Ba) and sulfur (S) may be sporadically distributed on the surface of the secondary particle. In addition, the compound containing barium (Ba) and sulfur (S) may be present in a form diffused along the grain boundary, the inner pore, and/or the inner gap from the surface portion of the secondary particle toward the central portion of the secondary particle.

The compound containing barium (Ba) and sulfur (S) may be present between the secondary particles. In this case, neighboring secondary particles may be present in a state of being attached to each other by the compound containing barium (Ba) and sulfur (S).

When the growth of unit particles constituting the lithium transition metal oxide is induced to an appropriate level by including predetermined amounts of barium (Ba) and sulfur (S) in the positive electrode active material, the average crystallite size of the lithium transition metal oxide may be 120 nm or more, 130 nm or more, 140 nm or more, 150 nm or more, 155 nm or more, or 159 nm or more. In addition, the average crystallite size of the lithium transition metal oxide may be 210 nm or less, 205 nm or less, 200 nm or less, 195 nm or less, 190 nm or less, or 185 nm or less.

The average crystallite size may be quantitatively analyzed through X-ray diffraction (XRD) analysis of the lithium transition metal oxide using Cu-Kα X-rays. Specifically, the average crystallite size of the lithium transition metal oxide may be obtained through Rietveld refinement of an X-ray diffraction pattern in a 2θ=10° to 120° region obtained through XRD analysis of the positive electrode active material including the lithium transition metal oxide.

When the average crystallite size of the lithium transition metal oxide including barium (Ba) and sulfur (S) is less than 120 nm, as the crystal growth effect of the unit particles constituting the lithium transition metal oxide is insignificant, it may be difficult to exhibit an effect of reducing the specific surface area of the lithium transition metal oxide and suppressing a side reaction with the electrolyte. When the average crystallite size of the lithium transition metal oxide including barium (Ba) and sulfur (S) exceeds 210 nm, a polarization phenomenon may occur as resistance increases, and cracks within the particles due to the polarization phenomenon may occur, which may ultimately cause a reduction in the cycle life of the positive electrode active material.

A change in the crystal structure according to the presence of barium (Ba) and sulfur (S) in the positive electrode active material and a form in which barium (Ba) and sulfur (S) are present in the positive electrode active material may be confirmed through XRD analysis of the positive electrode active material. The XRD analysis may be performed according to a known XRD analysis method for the positive electrode active material.

In the diffraction spectrum obtained by X-ray diffraction analysis of the positive electrode active material using Cu-Kα radiation, a main diffraction peak detected at 2θ=18.0 to 19.5° corresponds to a peak specific to a (003) crystal plane of a layered crystal structure belonging to the R-3m space group. The full width at half maximum of the peak specific to the (003) crystal plane detected through the XRD analysis may vary depending on the content of barium (Ba) and sulfur (S) in the positive electrode active material and/or the form in which barium (Ba) and sulfur (S) are present therein.

Herein, the full width at half maximum of the diffraction peak detected at 2θ=18.0 to 19.5° obtained by X-ray diffraction analysis of the positive electrode active material using Cu-Kα radiation may be 0.090 or less, 0.089 or less, 0.088 or less, or 0.0878 or less. In addition, the full width at half maximum of the diffraction peak detected at 2θ=18.0 to 19.5° may be 0.070 or more, 0.075 or more, 0.076 or more, 0.077 or more, 0.078 or more, 0.079 or more, or 0.080 or more.

When the growth of unit particles constituting the lithium transition metal oxide is induced to an appropriate level by including predetermined amounts of barium (Ba) and sulfur (S) in the positive electrode active material, the full width at half maximum of the diffraction peak detected at 2θ=18.0 to 19.5° obtained by X-ray diffraction analysis of the positive electrode active material using Cu-Kα radiation has a value of 0.070 or more and 0.090 or less, and the average crystallite size of the lithium transition metal oxide may be 120 nm or more and 210 run or less.

When barium (Ba) and sulfur (S) are present as BaSO₄ in the positive electrode active material, a peak specific to BaSO₄ may be detected during X-ray diffraction analysis of the positive electrode active material. Specifically, peaks specific to BaSO₄ may be detected at 20=25.5 to 26.2° and 2θ=28.5 to 28.9°.

When the growth of unit particles constituting the lithium transition metal oxide is induced to an appropriate level by including barium (Ba) and sulfur (S) in predetermined amounts in the positive electrode active material, and barium (Ba) not doped into the crystal lattice of the lithium transition metal oxide appropriately forms a compound (BaSO₄) with sulfur (S), a ratio ([B+C]/A) of a sum of an intensity (B) of a diffraction peak detected at 20=25.5 to 26.2° and an intensity (C) of a diffraction peak detected at 2θ=28.5 to 28.9° to an intensity (A) of a diffraction peak detected at 2θ=18.0 to 19.5° may be 0.005 or more and 0.03 or less. In addition, the ratio ([B+C]/A) of the intensities of the diffraction peaks may be 0.005 or more and 0.03 or less, 0.006 or more and 0.03 or less, 0.0062 or more and 0.03 or less, 0.005 or more and 0.025 or less, 0.006 or more and 0.025 or less, 0.0062 or more and 0.025 or less, 0.005 or more and 0.02 or less, 0.006 or more and 0.02 or less, 0.0062 or more and 0.02 or less, 0.005 or more and 0.018 or less, 0.006 or more and 0.018 or less, 0.0062 or more and 0.018 or less, 0.005 or more and 0.0178 or less, 0.006 or more and 0.0178 or less, or 0.0062 or more and 0.0178 or less.

The ratio ([B+C]/A) of the intensities of the diffraction peaks may vary depending not only on the relative intensity of a peak specific to the (003) crystal plane of the layered crystal structure belonging to the R-3m space group, but also on the relative intensity of a peak specific to BaSO₄.

When the growth of unit particles constituting the lithium transition metal oxide is induced to an appropriate level by including barium (Ba) and sulfur (S) in predetermined amounts in the positive electrode active material, and accordingly the relative intensity of a peak specific to the (003) crystal plane of the layered crystal structure belonging to the R-3m space group becomes relatively weak, the ratio ([B+C]/A) of the intensities of the diffraction peaks may increase. At this time, when the growth of the unit particles constituting the lithium transition metal oxide is excessively induced, the ratio ([B+C]/A) of the intensities of the diffraction peaks may become greater than 0.03.

When the ratio ([B+C]/A) of the intensities of the diffraction peaks becomes greater than 0.03 as the growth of the unit particles constituting the lithium transition metal oxide is excessively induced, the crystal growth of the unit particles constituting the lithium transition metal oxide becomes excessive, such that kinetic characteristics may deteriorate, or a problem of cycle life deterioration due to a polarization phenomenon may be caused.

When barium (Ba) not doped into the crystal lattice of the lithium transition metal oxide fails to sufficiently form a compound (BaSO₄) with sulfur (S), or when BaSO₄ is not present in the positive electrode active material, the ratio ([B+C]/A) of the intensities of the diffraction peaks may be less than 0.005. In addition, when the unit particles constituting the lithium transition metal oxide fail to grow sufficiently due to a lack or absence of barium (Ba) and/or sulfur (S) in the positive electrode active material, the ratio ([B+C]/A) of the intensities of the diffraction peaks may be less than 0.005.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 8 wt% to 98.5 wt%, with respect to the positive electrode slurry for forming the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode slurry for forming the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiOp (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode slurry for forming the negative electrode active material layer.

The binder is a component that assists in the bonding between a conductive material, an active material, and a current collector, and may typically be added in an amount of 0.1 wt% to 10 wt% with respect to the total weight of the negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode slurry for forming the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₃SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S₅-LiX (where X is a halogen element such as I or Cl), Li₂S-P₂S₅-Li₂O, Li₂S-P₂S₅-Li₂O-LiI, Li₂S-SiS₂, Li₂S-SiS₂-LiI, Li₁S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PREV); and a power storage system.

Hereinafter, the present invention will be described in more detail through examples. However, these examples are only for the purpose of illustrating the present invention and should not be construed as limiting the scope of the present invention.

### Preparation Example 1. Preparation of Positive Electrode Active Material

### Example 1

(a) An NiCoMn(OH)₂ hydroxide precursor was synthesized using nickel sulfate, cobalt sulfate, and manganese sulfate by a known co-precipitation method. In the hydroxide precursor, the molar ratio of Ni:Co:Mn was designed to be 96:2:2.
(b) The hydroxide precursor obtained in step (a), Ba(OH)₂·H₂O, and LiOH·H₂O (Li/(Ni+Co+Mn+Ba) molar ratio = 1.02) were mixed to prepare a mixture. Ba(OH)₂·H₂O was mixed so as to be 0.1 mol% based on the total metal elements excluding lithium in the mixture. Subsequently, the mixture was calcined at 830°C for 11 hours under an O₂ atmosphere to obtain a lithium transition metal oxide. Specifically, during calcination of the mixture, O₂ was supplied into a calcination furnace at a flow rate of 50 L/min, and after raising the temperature in the calcination furnace to 830°C over 3 hours, calcination was performed for 11 hours. Then, after completion of calcination, the calcination furnace was naturally cooled.

### Example 2

A positive electrode active material was prepared in the same manner as in Example 1, except that 0.2 mol% of Ba(OH)₂·H₂O was used in step (b).

### Example 3

A positive electrode active material was prepared in the same manner as in Example 1, except that 0.3 mol% of Ba(OH)₂·H₂O was used in step (b).

### Example 4

A positive electrode active material was prepared in the same manner as in Example 1, except that 0.4 mol% of Ba(OH)₂·H₂O was used in step (b).

### Example 5

A positive electrode active material was prepared in the same manner as in Example 1, except that 0.5 mol% of Ba(OH)₂·H₂O was used in step (b).

### Example 6

A positive electrode active material was prepared in the same manner as in Example 1, except that 0.55 mol% of Ba(OH)₂·H₂O was used in step (b).

### Example 7

A positive electrode active material was prepared in the same manner as in Example 1, except that 0.6 mol% of Ba(OH)₂·H₂O was used in step (b).

### Example 8

A positive electrode active material was prepared in the same manner as in Example 1, except that 0.65 mol% of Ba(OH)₂·H₂O was used in step (b).

### Example 9

A positive electrode active material was prepared in the same manner as in Example 1, except that 0.7 mol% of Ba(OH)₂·H₂O was used in step (b).

### Example 10

A positive electrode active material was prepared in the same manner as in Example 1, except that 0.75 mol% of Ba(OH)₂·H₂O was used in step (b).

### Example 11

A positive electrode active material was prepared in the same manner as in Example 1, except that 1.0 mol% of Ba(OH)₂·H₂O was used in step (b).

### Comparative Example 1

(a) An NiCoMn(OH)₂ hydroxide precursor was synthesized using nickel sulfate, cobalt sulfate, and manganese sulfate by a known co-precipitation method. In the hydroxide precursor, the molar ratio of Ni:Co:Mn was designed to be 96:2:2.
(b) The hydroxide precursor obtained in step (a) and LiOH·H₂O (Li/(Ni+Co+Mn) molar ratio = 1.02) were mixed to prepare a mixture. Subsequently, the mixture was calcined at 700°C for 18 hours under an O₂ atmosphere to obtain a lithium transition metal oxide. Specifically, during calcination of the mixture, O₂ was supplied into a calcination furnace at a flow rate of 50 L/min, and after raising the temperature in the calcination furnace to 700°C over 2.5 hours, calcination was performed for 11 hours. Then, after completion of calcination, the calcination furnace was naturally cooled.

### Comparative Example 2

A positive electrode active material was prepared in the same manner as in Comparative Example 1, except that the calcination temperature was 730°C in step (b). During calcination of the mixture, O₂ was supplied into a calcination furnace at a flow rate of 50 L/min, and after raising the temperature in the calcination furnace to 730°C over 2.5 hours, calcination was performed for 11 hours. Then, after completion of calcination, the calcination furnace was naturally cooled.

### Comparative Example 3

A positive electrode active material was prepared in the same manner as in Comparative Example 1, except that the calcination temperature was 830°C in step (b). During calcination of the mixture, O₂ was supplied into a calcination furnace at a flow rate of 50 L/min, and after raising the temperature in the calcination furnace to 830°C over 3 hours, calcination was performed for 11 hours. Then, after completion of calcination, the calcination furnace was naturally cooled.

### Comparative Example 4

A positive electrode active material was prepared in the same manner as in Comparative Example 1, except that the calcination temperature was 1,020°C in step (b). During calcination of the mixture, O₂ was supplied into a calcination furnace at a flow rate of 50 L/min, and after raising the temperature in the calcination furnace to 1,020°C over 4 hours, calcination was performed for 11 hours. Then, after completion of calcination, the calcination furnace was naturally cooled.

### Comparative Example 5

(a) An NiCoMn(OH)₂ hydroxide precursor was synthesized using nickel sulfate, cobalt sulfate, and manganese sulfate by a known co-precipitation method. In the hydroxide precursor, the molar ratio of Ni:Co:Mn was designed to be 96:2:2.
(b) The hydroxide precursor obtained in step (a), ZrO₂, and LiOH·H₂O (Li/(Ni+Co+Mn+Zr) molar ratio = 1.02) were mixed to prepare a mixture. ZrO₂ was mixed so as to be 1.0 mol% with respect to all metal elements excluding lithium in the mixture. Subsequently, the mixture was calcined at 850°C for 11 hours under an O₂ atmosphere to obtain a lithium transition metal oxide. During calcination of the mixture, O₂ was supplied into a calcination furnace at a flow rate of 50 L/min, and after raising the temperature in the calcination furnace to 850°C over 3 hours, calcination was performed for 11 hours. Then, after completion of calcination, the calcination furnace was naturally cooled.

### Comparative Example 6

(a) An NiCoMn(OH)₂ hydroxide precursor was synthesized using nickel sulfate, cobalt sulfate, and manganese sulfate by a known co-precipitation method. In the hydroxide precursor, the molar ratio of Ni:Co:Mn was designed to be 96:2:2.
(b) The hydroxide precursor obtained in step (a), ZrO₂, Al(OH)₃, and LiOH·H₂O (Li/(Ni+Co+Mn+Zr+Al) molar ratio = 1.02) were mixed to prepare a mixture. ZrO₂ was mixed so as to be 0.5 mol% with respect to all metal elements excluding lithium in the mixture, and Al(OH)₃ was mixed so as to be 0.5 mol% with respect to all metal elements excluding lithium in the mixture. Subsequently, the mixture was calcined at 850°C for 11 hours under an O₂ atmosphere to obtain a lithium transition metal oxide. During calcination of the mixture, O₂ was supplied into a calcination furnace at a flow rate of 50 L/min, and after raising the temperature in the calcination furnace to 850°C over 3 hours, calcination was performed for 11 hours. Then, after completion of calcination, the calcination furnace was naturally cooled.

### Comparative Example 7

A positive electrode active material was prepared in the same manner as in Example 1, except that 2.0 mol% of Ba(OH)₂·H₂O was used in step (b).

### Preparation Example 2. Preparation of Lithium Secondary Battery (Half-Cell)

A positive electrode slurry was prepared by dispersing 92 wt% of the positive electrode active material prepared according to Preparation Example 1, 4 wt% of artificial graphite, and 4 wt% of a polyvinylidene fluoride (PVDF) binder in N-methyl-2-pyrrolidone (NMP). The prepared positive electrode slurry was uniformly applied to an aluminum thin film substrate having a thickness of 15 µm and then vacuum-dried at 135°C to form a positive electrode.

A half-cell was prepared using lithium foil as a counter electrode for the positive electrode, a porous polyethylene film (Celgard 2300) having a thickness of 25 µm as a separator, and an electrolyte in which LiPF₆ was present at a concentration of 1.15M in a solvent in which ethylene carbonate and ethyl methyl carbonate were mixed at a volume ratio of 3:7.

### Preparation Example 3. Preparation of Lithium Secondary Battery (Full-Cell)

A positive electrode slurry was prepared by dispersing 90 wt% of the positive electrode active material prepared according to Preparation Example 1, 4.5 wt% of carbon black, and 5.5 wt% of a polyvinylidene fluoride (PVDF) binder in N-methyl-2-pyrrolidone (NMP). The prepared positive electrode slurry was uniformly applied to an aluminum thin film having a thickness of 15 µm and vacuum-dried at 135°C to prepare a positive electrode.

A full-cell was prepared using a graphite electrode as a counter electrode for the positive electrode, a porous polyethylene film (Celgard 2300) having a thickness of 20 µm as a separator, and an electrolyte in which LiPF₆ was present at a concentration of 1.15 M in a solvent in which ethylene carbonate, dimethyl carbonate, and ethyl methyl carbonate were mixed at a volume ratio of 2:4:4.

### Experimental Example 1. Analysis of composition of positive electrode active material

The contents (ppm) of barium (Ba) and sulfur (S) included in each positive electrode active material prepared in Preparation Example 1 were measured through ICP analysis of the positive electrode active material. The ICP analysis was performed according to a known method using an inductively coupled plasma spectrometer (ICP). The contents (ppm) of barium (Ba) and sulfur (S) measured according to the ICP analysis are shown in Table 1 below. In Comparative Examples 1 to 6, Ba was not detected in the final product, the positive electrode active material (lithium transition metal oxide), because Ba(OH)₂·H₂O was not used in step (b).

**[Table 1]**

| Classification | Ba (ppm) | S (ppm) | S/Ba (ppm/ppm) |
|---|---|---|---|
| Example 1 | 1,070 | 1,234 | 1.153 |
| Example 2 | 2,240 | 1,220 | 0.545 |
| Example 3 | 3,309 | 1,197 | 0.362 |
| Example 4 | 4.675 | 880 | 0.188 |
| Example 5 | 6,094 | 914 | 0.150 |
| Example 6 | 6,724 | 933 | 0.139 |
| Example 7 | 8,002 | 1,029 | 0.129 |
| Example 8 | 7,961 | 958 | 0.120 |
| Example 9 | 8,931 | 995 | 0.111 |
| Example 10 | 9,245 | 1,218 | 0.132 |
| Example 11 | 12,421 | 2,201 | 0.177 |
| Comparative Example 1 | n.d. | 1,111 | - |
| Comparative Example 2 | n.d. | 1,708 | - |
| Comparative Example 3 | n.d. | 1,750 | - |
| Comparative Example 4 | n.d. | 1,783 | - |
| Comparative Example 5 | n.d. | 1,230 | - |
| Comparative Example 6 | n.d. | 1,917 | - |
| Comparative Example 7 | 34,333 | 1,917 | 0.056 |

| | | | |
|---|---|---|---|
| *n.d.: not detected | | | |

### Experimental Example 2. SEM analysis of positive electrode active material

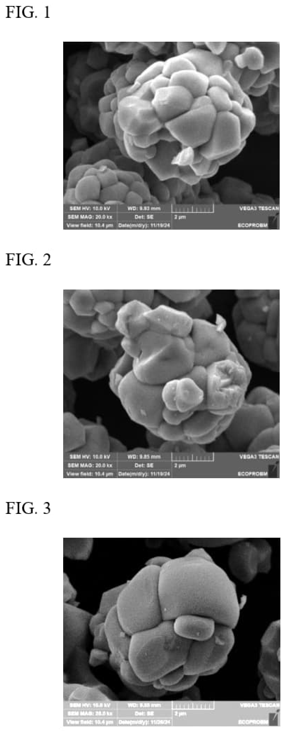

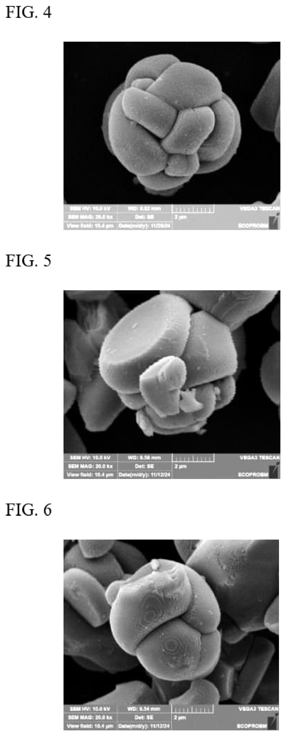

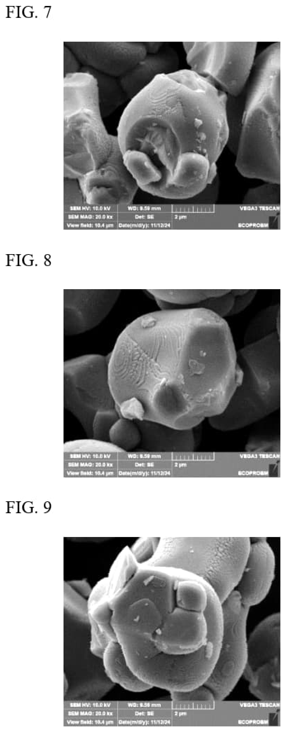

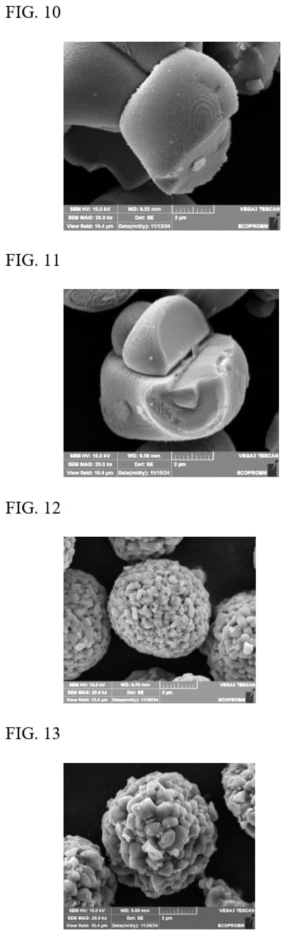

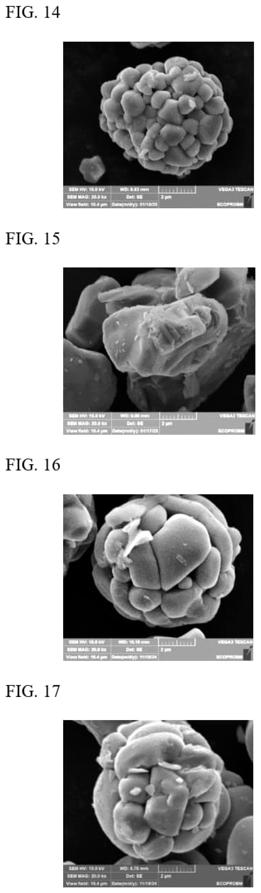

In order to confirm the size of unit particles of each positive electrode active material (lithium transition metal oxide) prepared in Preparation Example 1, SEM images were obtained by photographing with a scanning electron microscope. FIGS. 1 to 11 are SEM images of lithium transition metal oxides included in positive electrode active materials according to Examples 1 to 11, respectively, and FIGS. 12 to 18 are SEM images of lithium transition metal oxides included in positive electrode active materials according to Comparative Examples 1 to 7, respectively.

Referring to FIGS. 1 to 18, it can be confirmed that the positive electrode active materials according to Examples 1 to 11 and the positive electrode active materials according to Comparative Examples 4 to 7 include lithium transition metal oxides having at least one of a single particle form consisting of one unit particle and a pseudo-single particle form in which 30 or fewer unit particles are agglomerated. On the other hand, it can be confirmed that the positive electrode active materials according to Comparative Examples 1 to 3 have a polycrystalline structure in which the number of unit particles exceeds 30.

Subsequently, the major-axis lengths and minor-axis lengths of the unit particles were measured using an Image analyzer program, and the average particle diameter was calculated by setting the particle diameter of the unit particle to (major-axis length+minor-axis length)/2. The average particle diameters of the unit particles calculated according to the SEM analysis are shown in Table 2 below.

**[Table 2]**

| Classification | Average particle diameter of unit particles (µm) |
|---|---|
| Example 1 | 1.52 |
| Example 2 | 2.36 |
| Example 3 | 2.50 |
| Example 4 | 4.21 |
| Example 5 | 5.03 |
| Example 6 | 5.15 |
| Example 7 | 5.97 |
| Example 8 | 6.19 |
| Example 9 | 6.38 |
| Example 10 | 6.56 |
| Example 11 | 6.71 |
| Comparative Example 1 | 0.77 |
| Comparative Example 2 | 0.94 |
| Comparative Example 3 | 1.10 |
| Comparative Example 4 | 7.57 |
| Comparative Example 5 | 2.52 |
| Comparative Example 6 | 2.66 |
| Comparative Example 7 | 7.82 |

In addition, surface SEM/EDS analysis of the positive electrode active materials (lithium transition metal oxides) according to Example 3, Example 11, Comparative Example 1, Comparative Example 5, and Comparative Example 6 was performed to confirm coating materials present on the surfaces of the lithium transition metal oxides.

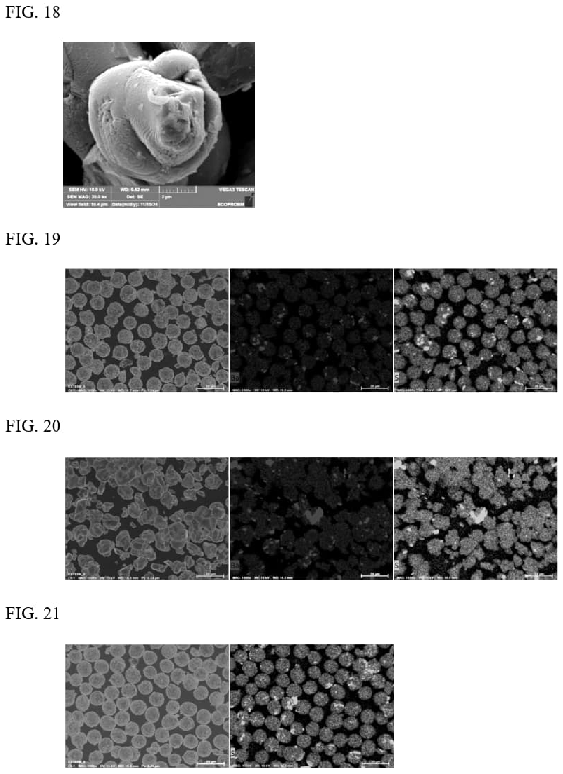

FIG. 19 shows the results of surface EDS analysis of the lithium transition metal oxide included in the positive electrode active material according to Example 3, and FIG. 20 shows the results of surface EDS analysis of the lithium transition metal oxide included in the positive electrode active material according to Example 11.

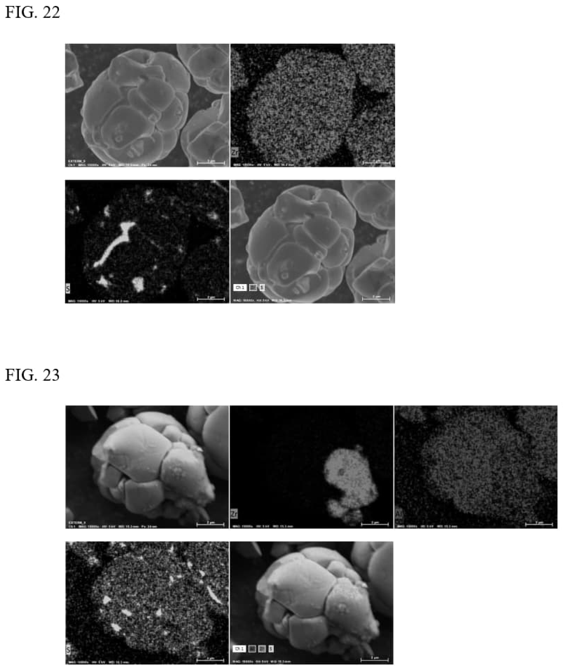

FIG. 21 shows the results of surface EDS analysis of the lithium transition metal oxide included in the positive electrode active material according to Comparative Example 1, FIG. 22 shows the results of surface EDS analysis of the lithium transition metal oxide included in the positive electrode active material according to Comparative Example 5, and FIG. 23 shows the results of surface EDS analysis of the lithium transition metal oxide included in the positive electrode active material according to Comparative Example 6.

Referring to FIG. 21, it can be confirmed that a sulfur (S) element remains on the surface of the lithium transition metal oxide according to Comparative Example 1. The sulfur (S) element remaining on the surface of the lithium transition metal oxide according to Comparative Example 1 is attributable to the transition metal sulfate used in the precursor synthesis step, and is highly likely to be Li₂SO₄ formed by reaction between lithium impurities and sulfate.

It can be confirmed that, because the lithium transition metal oxide according to Comparative Example 1 was not subjected to a washing process after synthesis, a large amount of sulfur (S) element remains on the surface of the lithium transition metal oxide.

Meanwhile, referring to FIGS. 19 and 20, it can be confirmed that a sulfur (S) element remains on the surfaces of the lithium transition metal oxides, as in Comparative Example 1. However, in the cases of Example 3 and Example 11, the detection positions of barium (Ba) and the detection positions of sulfur (S) substantially coincide with each other, which means that barium (Ba) and sulfur (S) were coated in the form of a compound (e.g., BaSO₄). Diffraction peaks specific to BaSO₄ were observed at 20=25.5 to 26.2° and 28.5 to 28.9° from diffraction spectra of the positive electrode active materials according to Examples 1 to 11 obtained by X-ray diffraction analysis using Cu-Kα radiation (1.540598 Å).

On the other hand, referring to FIGS. 22 and 23, unlike FIGS. 19 and 20, in the cases of Comparative Example 5 and Comparative Example 6, the detection positions of aluminum (A1) or zirconium (Zr) and sulfur (S) do not coincide with each other, and in particular, it can be confirmed that a region in which sulfur (S) is agglomerated is present on the surface. This means that aluminum (Al) or zirconium (Zr) and sulfur (S) did not form a compound and were not coated. In this case, the sulfur (S) element remaining on the surfaces of the lithium transition metal oxides according to Comparative Example 5 and Comparative Example 6 is highly likely to be Li₂SO₄ formed by reaction between lithium impurities and sulfate.

### Experimental Example 3. XRD analysis of positive electrode active material

X-ray diffraction (XRD) analysis was performed on each positive electrode active material prepared according to Preparation Example 1 to analyze the crystallographic characteristics of the coating portion formed on the surface of the lithium transition metal oxide. Specifically, the XRD analysis was performed with a Bruker D8E Endeavor diffractometer using Cu-Kα radiation (1.540598 Å).

The crystallite size of the lithium transition metal oxide was calculated from a straight line obtained, through Rietveld Refinement of a diffraction spectrum obtained by the XRD analysis, by plotting a diffraction angle θ (rad) and a full width at half maximum β (rad) within the 2θ=10° to 120° region on a coordinate plane having sinθ on the horizontal axis and βcosθ on the vertical axis.

The results of the XRD analysis are shown in Table 3 below.

**[Table 3]**

| Classification | Crystallite size (nm) | FWHM (003) | (B+C)/A |
|---|---|---|---|
| Example 1 | 162 | 0.0878 | 0.0062 |
| Example 2 | 172 | 0.0856 | 0.0086 |
| Example 3 | 159 | 0.0883 | 0.0102 |
| Example 4 | 178 | 0.0842 | 0.0106 |
| Example 5 | 182 | 0.0833 | 0.0118 |
| Example 6 | 182 | 0.0844 | 0.0095 |
| Example 7 | 185 | 0.0828 | 0.0100 |
| Example 8 | 182 | 0.0809 | 0.0106 |
| Example 9 | 184 | 0.0835 | 0.0127 |
| Example 10 | 184 | 0.0825 | 0.0140 |
| Example 11 | 185 | 0.0801 | 0.0178 |
| Comparative Example 1 | 85 | 0.1093 | 0.0048 |
| Comparative Example 2 | 99 | 0.1037 | 0.0047 |
| Comparative Example 3 | 175 | 0.0919 | 0.0031 |
| Comparative Example 4 | 175 | 0.0961 | 0.0041 |
| Comparative Example 5 | 179 | 0.0824 | 0.0043 |
| Comparative Example 6 | 175 | 0.0838 | 0.0038 |
| Comparative Example 7 | 219 | 0.0817 | 0.0305 |

| | | | |
|---|---|---|---|
| *FWHM (003): Full width at half maximum of the diffraction peak detected at 2θ=18.0 to 19.5° *(B+C)/A: A ratio of a sum of an intensity (B) of a diffraction peak detected at 20=25.5 to 26.2° and an intensity (C) of a diffraction peak detected at 2θ=28.5 to 28.9° to an intensity (A) of a diffraction peak detected at 2θ=18.0 to 19.5°; as the intensity (A) of the diffraction peak detected at 2θ=18.0 to 19.5°, the intensity (B) of the diffraction peak detected at 2θ=25.5 to 26.2°, and the intensity (C) of the diffraction peak detected at 2θ=28.5 to 28.9°, values obtained by removing a background signal from an XRD spectrum normalized based on the intensity (A) of the diffraction peak detected at 2θ=18.0 to 19.5° were used. | | | |

Referring to the results of Table 3 above, it can be confirmed that the ratios ([B+C]/A) of the intensities of the diffraction peaks observed in Comparative Examples 1 to 6 are less than 0.005. The above results mean that BaSO₄ is not present due to the absence of barium (Ba) in the positive electrode active material. Meanwhile, it can be confirmed that the ratio ([B+C]/A) of the intensities of the diffraction peaks observed in Comparative Example 7 is greater than 0.03. When the ratio ([B+C]/A) of the intensities of the diffraction peaks is greater than 0.03, the crystal growth of the unit particles constituting the lithium transition metal oxide becomes excessive, such that kinetic characteristics may deteriorate, or a problem of cycle life deterioration due to a polarization phenomenon may be caused.

### Experimental Example 4. Evaluation of electrochemical characteristics of lithium secondary battery (half-cell)

The capacity per unit volume was measured for the lithium secondary batteries (half-cells) prepared in Preparation Example 2 through a charge/discharge experiment in which a charge/discharge rate of IC/IC was applied within an operating voltage range of 3.0 V to 4.4 V at 25 °C. The capacity per unit volume (mAh/cc) was calculated by multiplying the initial discharge capacity (mAh/g) by the compressed density (g/cc). The compressed density (g/cc) was measured after 3 g of each positive electrode active material prepared according to Preparation Example 1 was pressed by 4.5 tons for 5 seconds using a pelletizer.

The measurement results are shown in Table 4 below.

**[Table 4]**

| Classification | Capacity per unit volume (mAh/cc) |
|---|---|
| Example 1 | 637.6 |
| Example 2 | 631.5 |
| Example 3 | 620.2 |
| Example 4 | 627.8 |
| Example 5 | 629.3 |
| Example 6 | 626.3 |
| Example 7 | 629.3 |
| Example 8 | 632.0 |
| Example 9 | 630.9 |
| Example 10 | 639.8 |
| Example 11 | 638.9 |
| Comparative Example 1 | 614.5 |
| Comparative Example 2 | 616.0 |
| Comparative Example 3 | 600.9 |
| Comparative Example 4 | 552.8 |
| Comparative Example 5 | 529.8 |
| Comparative Example 6 | 527.8 |
| Comparative Example 7 | 521.9 |

Comparing Examples 1 to 11 and Comparative Examples 4 to 7, which have similar average particle diameters of the unit particles described in Table 2, it can be confirmed that the capacities per unit volume of the lithium secondary batteries using the positive electrode active materials according to Examples 1 to 11, in which coating portions including barium (Ba) and sulfur (S) were formed, are greater than those of the lithium secondary batteries using the positive electrode active materials according to Comparative Examples 4 to 7. In addition, it can be confirmed that the capacities per unit volume of the lithium secondary batteries using the positive electrode active materials according to Examples 1 to 11 are greater than those of the lithium secondary batteries using the positive electrode active materials according to Comparative Examples 1 to 3, which have a polycrystalline structure in which the number of unit particles exceeds 30.

### Experimental Example 5. Evaluation of stability of lithium secondary battery (full-cell)

For the lithium secondary batteries (full-cells) prepared in Preparation Example 3, 500 cycles of charge/discharge were performed using an electrochemical analyzer (Toyo, Toscat-3100) under conditions of 25 °C, a voltage range of 3.0 V to 4.3 V, and 1C/1C, and then a change in volume of the pouch cell (v1) after 500 cycles of charge/discharge relative to the initial pouch cell volume was measured using an electronic densimeter (SID-220W). Then, after 500 cycles of charging/discharging, the pouch cell (v1) was stored at 25 °C for 4 weeks, and then a volume increase rate of the pouch cell (v2) after 4 weeks relative to the volume of the pouch cell (v1) after 500 cycles of charging/discharging was measured.

The measurement results are shown in Table 5 below.

**[Table 5]**

| Classification | Volume increase rate (%) |
|---|---|
| Example 5 | 5.2 |
| Comparative Example 2 | 17.7 |
| Comparative Example 4 | 8.3 |
| Comparative Example 7 | 7.6 |

Referring to the results of Table 5, it can be confirmed that the volume increase rate of the lithium secondary battery (full-cell) using the positive electrode active material according to Comparative Example 2 is greater than that of the lithium secondary battery (full-cell) using the positive electrode active material according to Example 5. This result is expected to be attributable to the presence or absence of barium (Ba) in the positive electrode active material and a difference in the average particle diameter of the unit particles. In addition, it can be confirmed that the volume increase rate of the lithium secondary battery (full-cell) using the positive electrode active material according to Comparative Example 4 is greater than that of the lithium secondary battery (full-cell) using the positive electrode active material according to Example 5. This result is expected to be attributable to the presence or absence of barium (Ba) in the positive electrode active material.

Furthermore, it can be confirmed that the volume increase rate of the lithium secondary battery (full-cell) using the positive electrode active material according to Comparative Example 7 is greater than that of the lithium secondary battery (full-cell) using the positive electrode active material according to Example 5. This result is expected to be because not only is the absolute content of barium (Ba) in the positive electrode active material high, but the content of barium (Ba) is also excessively high compared to sulfur (S).

### Experimental Example 6. Analysis of content of surface residual lithium impurities of positive electrode active material

The content of lithium impurities remaining on the surface of each positive electrode active material prepared according to Preparation Example 1 was quantitatively analyzed through a known method. Specifically, 5 g of each positive electrode active material prepared according to Preparation Example 1 and 100 g of deionized water were placed in a 300 mL beaker, and then stirred at a speed of 300 rpm for 15 minutes using a magnetic bar.

Thereafter, filtering was performed using a vacuum flask, and then 50 g was aliquoted. The aliquoted solution was placed in a container of an auto titrator and automatically titrated with 0.1 N HCl with reference to the Warder method to measure LiOH and Li₂CO₃ values in the solution.

The residual lithium analysis results are shown in Table 6 below.

**[Table 6]**

| Classification | LiOH (ppm) | Li₂CO₃ (ppm) | sum (ppm) |
|---|---|---|---|
| Example 1 | 13,868 | 3,372 | 17,240 |
| Example 2 | 14,000 | 3,227 | 17,228 |
| Example 3 | 15,915 | 3,486 | 19,400 |
| Example 4 | 14,995 | 2,486 | 17,481 |
| Example 5 | 11,740 | 2,944 | 14,684 |
| Example 6 | 14,891 | 2,800 | 17,691 |
| Example 7 | 17,714 | 2,739 | 20,453 |
| Example 8 | 17,004 | 2,826 | 19,830 |
| Example 9 | 14,258 | 2,198 | 16,456 |
| Example 10 | 15,829 | 2,570 | 18,399 |
| Example 11 | 16,795 | 3,088 | 19,883 |
| Comparative Example 3 | 19,652 | 2,883 | 22,536 |
| Comparative Example 4 | 43,097 | 6,429 | 49,526 |
| Comparative Example 5 | 19,074 | 4,705 | 23,779 |
| Comparative Example 6 | 22,747 | 3,191 | 25,938 |
| Comparative Example 7 | 20,821 | 2,406 | 23.227 |

Referring to the results of Table 6, it can be confirmed that, when the average particle diameters of the unit particles constituting the lithium transition metal oxide are similar, the content of lithium impurities is reduced to a certain level or less without a washing process by including predetermined contents of barium (Ba) and sulfur (S) in the positive electrode active material. In addition, referring to the results of Comparative Examples 5 and 6, it can be confirmed that, even when zirconium or aluminum is used instead of barium, the effect of reducing lithium impurities is insufficient compared to that of Comparative Example 3.

Meanwhile, referring to the result of Comparative Example 7, it can be confirmed that, when not only the absolute content of barium (Ba) in the positive electrode active material is high, but also the content of barium (Ba) is excessively high compared to sulfur (S), the effect of reducing lithium impurities is decreased.

Although embodiments of the present invention have been described above, those of ordinary skill in the art will be able to modify and change the present invention in various ways by adding, changing or deleting components within a range not departing from the spirit of the present invention described in the claims, and such modifications or changes will also be said to be included within the scope of rights of the present invention.

## Claims

1. A positive electrode active material comprising a lithium transition metal oxide capable of lithium intercalation/deintercalation,
wherein the positive electrode active material comprises barium (Ba) and sulfur (S),
the full width at half maximum of a diffraction peak detected at 2θ=18.0 to 19.5° obtained by X-ray diffraction analysis of the positive electrode active material using Cu-Kα radiation is 0.090 or less, and
the average crystallite size of the lithium transition metal oxide is 120 nm to 210 nm.

2. The positive electrode active material according to claim 1, wherein the ratio ([B+C]/A) of a sum of an intensity (B) of a diffraction peak detected at 2θ=25.5 to 26.2° and an intensity (C) of a diffraction peak detected at 2θ=28.5 to 28.9° to an intensity (A) of a diffraction peak detected at 20=18.0 to 19.5° obtained by X-ray diffraction analysis of the positive electrode active material using Cu-Kα radiation is 0.005 or more and 0.03 or less.

3. The positive electrode active material of claim 1, wherein the lithium transition metal oxide comprises at least one selected from nickel, cobalt, manganese, and aluminum.

4. The positive electrode active material of claim 1, wherein the lithium transition metal oxide comprises nickel, cobalt, and manganese.

5. The positive electrode active material of claim 1, wherein barium (Ba) is doped into a crystal lattice of the lithium transition metal oxide.

6. The positive electrode active material of claim 1, wherein the lithium transition metal oxide has at least one of a single particle form consisting of one unit particle and a secondary particle form in which a plurality of unit particles are agglomerated.

7. The positive electrode active material of claim 6, wherein the average particle diameter of the unit particles measured from an SEM image of the lithium transition metal oxide ranges from 1.5 µm to 7.5 µm.

8. The positive electrode active material of claim 1, wherein the lithium transition metal oxide has a single particle form, and barium (Ba) and sulfur (S) are present on at least a portion of the surface of the single particle.

9. The positive electrode active material of claim 1, wherein the lithium transition metal oxide has a pseudo-single particle form in which 30 or fewer unit particles are agglomerated, and
barium (Ba) and sulfur (S) are present on at least a portion of the surface of a unit particle forming the outermost surface of the pseudo-single particle, the surface of a unit particle isolated inside the pseudo-single particle, and an interface between unit particles isolated inside the pseudo-single particle.

10. The positive electrode active material of claim 1, wherein the lithium transition metal oxide comprises nickel in an amount of 60 mol% or more with respect to all elements excluding lithium.

11. The positive electrode active material of claim 1, wherein the lithium transition metal oxide has an average composition represented by Chemical Formula 1 below:
[Chemical Formula 1] LiₐN_{i1-(b+c+d)}Co_{b}M1_{c}M2_{d}O₂
in Chemical Formula 1,
M1 is at least one selected from Mn and Al,
M2 is at least one selected from Zr, Na, S, Mg, Ti, B, K, Ca, Sr, Ba, Rb, Ce, Hf, Ta, Cr, F, V, Fe, Zn, Si, Y, Nb, Ga, Sn, Mo, W, P, Ge, Nd, Gd, and Cu, and
0.85≤a≤1.15, 0≤b≤0.20, 0≤c≤0.20, 0≤d≤0.05, and 0<b+c≤0.40.

12. The positive electrode active material of claim 1, wherein barium (Ba) is contained in an amount ranging from 200 ppm to 30,000 ppm with respect to the total weight of the positive electrode active material.

13. The positive electrode active material of claim 1, wherein sulfur (S) is contained in an amount ranging from 500 ppm to 3,000 ppm with respect to the total weight of the positive electrode active material.

14. A positive electrode comprising the positive electrode active material according to any one of claims 1 to 13.

15. A lithium secondary battery using the positive electrode according to claim 14.
